**Europäisches Patentamt**

**European Patent Office**

**Office européen des brevets**

(19)

(11) Veröffentlichungsnummer : **0 354 906 B1**

(12)

# EUROPÄISCHE PATENTSCHRIFT

(45) Veröffentlichungstag der Patentschrift :
**20.05.92 Patentblatt 92/21**

(51) Int. Cl.$^5$ : **C02F 3/30,** C02F 1/24,
C02F 1/52

(21) Anmeldenummer : **88902437.8**

(22) Anmeldetag : **26.02.88**

(86) Internationale Anmeldenummer :
**PCT/EP88/00141**

(87) Internationale Veröffentlichungsnummer :
**WO 88/06570 07.09.88 Gazette 88/20**

(54) **BIOLOGISCHE DEPHOSPHATIERUNG UND (DE)NITRIFIZIERUNG.**

(30) Priorität : **27.02.87 DE 3706405**

(43) Veröffentlichungstag der Anmeldung :
**21.02.90 Patentblatt 90/08**

(45) Bekanntmachung des Hinweises auf die
Patenterteilung :
**20.05.92 Patentblatt 92/21**

(84) Benannte Vertragsstaaten :
**AT BE CH DE FR GB IT LI LU NL SE**

(56) Entgegenhaltungen :
**EP-A- 0 019 203**
**DE-A- 2 454 426**
**DE-A- 3 716 782**
**NL-A- 7 802 124**
**US-A- 3 953 327**
**ATV Lehr- u. Handbuch der Abwassertechnik.**
**3. Aufl., Bd. 4, "Biologisch-Chemische u. wei-**
**tergehende Abwasserreinigung" 1985,Ernst &**
**Sohn Verlag, Berlin, Seiten 311-314**

(73) Patentinhaber : **LORENZ, Günter**
**Am Rehlingsbach 25**
**W-6382 Friedrichsdorf/Ts. (DE)**
Patentinhaber : **LORENZ, Jürgen**
**Mozartweg 11**
**W-6804 Ilvesheim (DE)**

(72) Erfinder : **LORENZ, Günter**
**Am Rehlingsbach 25**
**W-6382 Friedrichsdorf/Ts. (DE)**
Erfinder : **LORENZ, Jürgen**
**Mozartweg 11**
**W-6804 Ilvesheim (DE)**

(74) Vertreter : **Katscher, Helmut, Dipl.-Ing.**
**Bismarckstrasse 29**
**W-6100 Darmstadt (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Abwasserreinigung in technischen Abwasserreinigungsanlagen, in denen eine Umwandlung und Ausscheidung von Stickstoff durch biologische Nitrifikation und Denitrifikation erfolgt, wobei das Abwasser mindestens einen aeroben biologischen Bereich durchläuft und mindestens ein Teilstrom nitrifizierend behandelt wird, wobei aus einem nitrifizierenden Bereich, der eine niedriger belastete Abbauzone für Nitrifikation oder eine niedriger belastete Nachbehandlungszone für Nitrifikation ist, ein nitrifikantenreiches Wasser-Schlamm-Gemisch, bestehend aus nitrifikantenreichem, sauerstoffreichem abgesetztem Abwasser und/oder nitrifikantenreichem Rücklaufschlamm, in mindestens einen Bereich geführt wird, der nicht gezielt nitrifizierend gefahren wird.

Häusliche und industrielle Abwässer enthalten organische und anorganische Stickstoffverbindungen. Im häuslichen Abwasser liegen organische Stickstoffverbindungen beispielsweise als Eiweißkörper, Peptide, Aminosäuren und Harnstoff vor, während die anorganischen Stickstoffverbindungen größtenteils als Ammoniumlonen und zum geringeren Teil als Ammoniak vorliegen. Bereits im Kanalnetz beginnt eine Umsetzung zum Ammonium. Im Abwasser enthaltener oxidierter Stickstoff in Form von Nitraten ist industrieller, gewerblicher oder landwirtschaftlicher Herkunft. Die im Abwasser enthaltenen Stickstoffverbindungen beeinträchtigen die Gewässer in mehrfacher Hinsicht.

In Form von organischen Stickstoffverbindungen oder als Ammonium ist der Stickstoff im Gewässer ein sauerstoffzehrender Stoff, da durch mikrobiologische Vorgänge im Gewässer eine Oxidation zu Nitrit oder Nitrat erfolgt. Bei schwachen Vorflutern oder niedrigen Sauerstoffgehalten im Gewässer können durch diese Vorgänge kritische Konzentrationen an gelöstem Sauerstoff unterschritten werden. Sowohl Nitrit als auch Ammoniak sind fischgiftig. Der Anteil des toxischen Ammoniaks ist vom pH-Wert abhängig und steigt in diesem entsprechend an. Außerdem ist Stickstoff ebenso wie Phosphor ein eutrophierender Stoff.

Deshalb muß Abwasser mit hohem Stickstoffanteil einer Behandlung unterworfen werden, bei der der Stickstoff angewandelt und eliminiert wird. Bei der biologischen Stickstoffeliminatin wird der Ammoniumstickstoff in zwei Verfahrensstufen zunächst zu Nitrat oxidiert (Nitrifikation) und dann zu elementarem Stickstoff reduziert (Denitrifikation), der als Gas entweicht.

Die Abwasserreinigung stellt wegen der unterschiedlichen möglichen Betriebsbedingungen, die in erster Linie von der Art und Menge der anfallenden Abwässer bestimmt werden, sowie gegebenenfalls durch die Verwendung bereits vorhandener Anlagen bzw. Anlagenteile einen sehr komplexen Zusammehang dar. Ziel jedes verbesserten Verfahrens zur Abwasserreinigung muß es sein, unter Berücksichtigung aller Verfahrensparameter ein insgesamt optimales Betriebsergebnis zu erzielen.

Bei einem bekannten Verfahren der eingangs genannten Gattung (DE-A-2 454 426) wird nach einer Nitrifikation in einer Belebung das Abwasser mit einem bestimmten Faktor in den Eingangsteil des Reaktors geführt, um es dort vorgeschaltet zu denitrifizieren. Dem Denitrifikationsteil kann ein weiterer anaerob betriebener Reaktorteil vorgeschaltet werden; im vorgenannten Reaktorteil behandeltes Abwasser kann zusätzlich zugeleitet werden. Dieses Verfahren bewirkt mit den entsprechenden Schaltungen entweder einen anoxischen (Denitrifikation) und/oder einen anaeroben Zustand (Phosphatrücklösung). Es erfolgt jedoch keine frühzeitige Nitrifikatenvermehrung und entsprechende Nitrifikation. Dies gilt auch für ähnliche bekannte Verfahren (ATV "Lehr- und Handbuch der Abwassertechnik", S. 311-315).

Bei einem anderen bekannten Verfahren (EP-A- 0 019 203), das speziell aber für hoch belastete, organische und stickstoffhaltige Abwässer bestimmt ist, wird der technische Erfolg im wesentlichen durch eine zweistufige Belebungsanlage erreicht, wobei die erste Stufe hochbelastet gefahren wird und ein Teil des zufließenden Rohabwassers direkt als Bypass, ohne Behandlung in der ersten Stufe, der zweiten Stufe zugeleitet wird, die die letzte Behandlungsstufe darstellt. Dieser zweiten Stufe wird Schwimmschlamm aus der ersten Stufe zugeleitet; die zweite Stufe wird wie oben beschrieben mit einer vorgeschalteten Denitrifikation betrieben.

Der technische Erfolg wird unter vergleichsweise hohen Betriebstemperaturen (20-30°C) erreicht. Die spezifische Leistungsfähigkeit von Nitrifikanten liegt dabei um den Faktor 4-5 höher, als unter Bedingungen, die z. B. kommunale Anlagen aufweisen.

Aufgabe der Erfindung ist es daher, ein Verfahren der eingangs genannten Gattung so auszugestalten, daß eine Optimierung des Abbauprozesses in technischen Abwässerreinigungssystemen erzielt wird, wobei eine erhöhte Reduktion des Sauerstoffbedarfs (BSB 5 und CSB) durch erhöhten Aufschluß schwer abbaubarer Substanzen und eine weitergehende Abwasserreinigung durch verbesserte Nitrifikation, Hydrolyse, Phosphataufnahme und - elimination sowie Denitrifikation bei verbesserter Energiebilanz erreicht wird.

Diese Aufgabe wird mit den kennzeichnenden Merkmalen des Patentanspruchs 1 gelöst.

Vorteilhafte Ausgestaltungen des erfindungsgemäßen Verfahrens sind Gegenstand der abhängigen Ansprüche.

Mit dem erfindungsgemäßen Verfahren wird eine Erhöhung der biologischen Einwirkzeit der jeweils aktiven Biozönose, insbesondere der nitrifikantenhaltigen Masse, durch die Erweiterung der biologisch aktiven Reaktionsräume, durch gezielte und erweite Nitrifikantenvermehrung und durch gezielte und definitive Verteilung und Führung der Biomasse erzielt.

Dies geschieht in erfindungsgemäßer Weise durch Anwendung mindestens einer Maßnahme nach

A. - durch gezielte Aktivierung mindestens eines vorher nicht gezielt biologisch aktivierten oder genutzten Vorbehandlungsbereiches, durch Zuführung eines biologisch behandelten, nitrifikanten- und sauerstofffreichen AbwasserSchlammgemisch, vorzugsweise aus dem oberen Sedimentations- oder Ablaufbereichdes Nachklärbereiches oder dessen Ablaufes. Die Zuführung erfolgt vorzugsweise möglichst weit vor den Einlaufbereich der Anlage.

B. - durch gezielte Aktivierung mindestens eines biologisch aktiven Bereiches, der aber nicht gezielt auf Nitrifikation arbeitet, erfindungsgemäß durch Zuführung eines biologisch behandelten, nitrifikantenreichen Abwasser-Schlammgemisches, vorzugsweise als Überschußbzw. Rücklaufschlamm aus dem nitrifizierenden Bereich, wobei der biologische Bereich in folgender Weise arbeiten muß.

Das Abwasser durchläuft zunächst eine Vorklärung, soweit diese vorhanden ist. Danach kann es im Haupt- oder Teilstrom eine vorgeschaltete Hochlast- bzw. Adsorptionsstufe (HBAC 1) durchlaufen.

Nachfolgend erfolgt eine Weiterbehandlung in erfindungsgemäßer Weise, wobei ein Teil des Abwassers in einer höher belastet gefahrenen Zone (HBAC 2), der andere Teil in einer niedriger belasteten Zone (NBAN) behandelt wird. Die niedriger belastete Zone wird dabei unter, für Nitrifikation günstigen Bedingungen gefahren. Sofern das Abwasser eine Vorbehandlung in der Hochlaststufe (HBAC 1) erfahren hat, kann es auch für den Teil, der über die Höherlaststufe (HBAC 2) behandelt werden soll, über eine normale Durchlaufstrecke ohne weitere Behandlung in der Hauptstufe weitergeleitet werden. Hierbei ist aber eine gemeinsame Weiterbehandlung nach Zusammenführung des höher und niedriger belasteten Abwassers, in einer nachgeschalteten Zone (NABN + C) in verfahrensgemäßer Weise Voraussetzung. Vorzugsweise erfolgt jedoch eine weitere Behandlung des Abwassers in der höher belasteten Zone (HBAC 2). Die höher belastete Zone wird dabei unter günstigen Bedingungen für die Vermehrung u.a. der schnell wachsenden chemoorganotrophen Bakterien gefahren. Die höher belastete Zone, wie auch die Hochlaststufe (HBAC 1) wird je nach Zielanforderung entweder zur erhöhten Energiegewinnung mit erhöhter Schlammproduktion gefahren oder zur erhöhten Phosphataufnahme mit entsprechend verlängerter Belüftungszeit und höherem Schlammalter gefahren.

Die Differenz der Belastungen zwischen NBAN und HBAC 2 beträgt im Minimum 0, im Maximum 19,5 kg BSB/kg TS. Entsprechende umgerechnete Werte gelten für Tropfkörper.

Vorzugsweise erfolgt eine Zusammenführung des Abwassers aushöher und niedriger belasteter zone in einer gesonderten Nachbehandlungszone (NBAN + C).

Vorzugsweise wird am Beginn dieser Zone denitrifiziert.

Vorzugsweise wird am Ende dieser Zone denitrifiziert.

Der Abbaugrad in der höher belasteten Zone richtet sich nach dem Vorhandensein einer Nachbehandlungszone und den dort erforderlichen BSB-Bedarf.

Fehlt eine Nachbehandlungszone, so wird der Abbaugrad über die entsprechende Belastungseinstellung so gewählt, daß die erforderlichen Ablaufwerte im zulässigen Schwankungsbereich gehalten werden.

Vorzugsweise erfolgt eine Schlammtrennung zwischen höher und niedriger belasteten Zonen. Hierbei wird ein Absetzbereich der höher belasteten Zone nachgeschaltet. Die Schlammführung der hoch, höher belasteten Zonen erfolgt getrennt an den niedriger belasteten Zonen.

Definitionsgemäß sind erfindungsgemäße Aktivierungsbereiche:

– Zulaufkanal oder -strecke (n)

– Einlaufpumpwerk mit Sammelschacht (ELPW)

– Sand- und Fettfang (SF)

– Regenüberlaufbecken (RÜB)

– Vorklärbecken (VKB)

– Alle Zulaufstrecken, - sammler und Pufferbereiche, - becken bis zur biologischen Hauptstufe.

Definitionsgemäß besteht das AbwasserSchlammgemisch (RFW) aus nitrifikantenund sauerstofffreichen Wasser-Schlammteilen.

Varianten des Verfahrens nach A sind:

1. Zusätzlich erfolgt vorzugsweise die Zumischung von nitrifikantenreichen Schwimmschlamm (SS) aus dem Zwischen- bzw. Nachklärbereich.

2. Zusätzlich kann die Zumischung von nitrifikantenreichen Überschußschlamm ( ÜSN) sowie nicht abgesetztem nitrifikantenreichem Kreislaufwasser (RLW) zu den Aktivierungszonen erfolgen.

3. Vorzugsweise sind die Schlämme vor Zumischung zum Rückführungswasser bzw. Zuleitung in die Aktivierungszonen einer geeigneten Phosphatrücklösung zu unterziehen.

4. Vorzugsweise wird das Kreislaufwasser (RLW) direkt ohne Zumischung zum RFW in einen für zusätzliche Denitrifikation vorgesehen Aktivierungsbereich gemäß A. geleitet.

5. Vorzugsweise werden die den Aktivierungsbereichen zugeleiteten Massen vor ihrer Zuführung in den biologischen Hauptstufen denitrifiziert.

6. Vorzugsweise wird der den Aktivierungsbereichen zugeleitete nitrifikantenreiche Schlamm in der Zugabemenge begrenzt durch die Bedarfsmenge an Nitrifikanten in der biologischen Haupstufe.

7. Die Zugabemenge des nitrifikantenreichen Schlammes wird bei Regenwetter in die Aktivierungszonen soweit erhöht, daß der eingetragene Sauerstoff durch die Aktivierung möglichst vollständig in den Aktivierungszonen verbraucht wird.

8. Der Abzug von Rückführwasser (RFW) aus den Klarwasser- und Sedimendationszonen der Absetzbereiche erfolgt variabel, so daß durch erhöhten Abzug aus der Sedimendationszone der Schlammanteil im Rückfuhrwasser erhöht werden kann.

9. Der zusätzliche Abzug und die Zuführung von nitratreichen Kreislaufwasser (RLW) erfolgt nur direkt in einen Ativierungsbereich, der den zur Hydrolyse und Nitrifikation aktivierten Bereiche nachgeschaltet ist.

10. Die Aktivierungsbereiche und Fließstrecken für das Rückführungswasser können über abstellbare Belüftungssysteme zusätzlich belüftet werden.

11. Vorzugsweise erfolgt eine zusätzliche Nachbelüftung des Rückfuhrwassers im Endbehandlungs- bzw. Abzugsbereich nach dem Absetzvorgang des Abwassers im Nachklärbereich.

12. Die Aktivierungszonen werden in folgender Reihenfolge durch Rückfuhrwasser und nitrifikantenreichen Schlamm sowie Kreislaufwasser aktiviert:

   a) Nutzung von Aktivierungsbereichen zur Phosphatrücklösung unter Zuleitung von phosphatreichem, möglichst nitratarmem Schlamm. Hierbei erfolgt keinerlei Zuführung von Sauerstoff.

   b) Nachfolgende Aktivierung von weiteren Aktivierungszonen zur Hydrolyse, Nitrifikation, erhöhten Phosphataufnahme, wobei nitrifikantenreicher Überschußschlamm zugeführt wird.

   c) Der Nitrifikation nachfolgende verstärkte Aktivierungen einer Aktivierungszone zur erhöhten Denitrifikation durch zusätzliche Zuleitung von nitratreichem Kreislaufwasser (RLW); Vorzugsweise wird hierbei der unmittelbar vor der biologischen Hauptzone liegende Bereich genutzt (Vorklärbecken).

Varianten des Verfahrens nach B sind:

1. Die biologischen Hauptzonen (HBAC 2 und NBAN) werden in ihren gewählten Optimalbereichen nach Regeln der Technik gefahren. Zusätzlich werden weitere Parallelzonen belastungsabhängig in der Weise gefahren, daß sie bei niedriger Gesamtzulaufbelastung energieminimierend, aber nitrifizierend bzw. interwallweise nitrifizierend und denitrifizierend gefahren werden.

Hierbei hat die Erhaltung einer nitrifizierenden Biozönose Vorrang. Es erfolgt entsprechend der reduzierten Zulaufbelastung eine niedrigere Sauerstoffzufur, wobei der Konzentrationsweïse vorzugsweïse auf < 2 mg/l - 0,5 mg/l gesenkt wird. Die Sauerstoffversorgung wird so gefahren, daß eine schnelle Aktivierung möglich ist. Schnell in dem Sinne, daß die Biozönose bei steigender Zulaufbelastung im zulässigen Belastungsbereich bleibt und die erforderliche zusätzliche Sauerstoffzufuhr bei Belastungserhöhung nicht größer ist, als wenn die Zone dauernd unter konstanter Sauerstoffzufuhr gefahren worden wäre.

Eine zusätzliche verfahrensgemäße schnelle Aktivierung ist durch Zuführung externer Biozönosemasse aus den anderen Abbauzonen möglich.

Eine Denitrifikation erfolgt nur begrenzt unter Einhaltung o.g. Bedingungen.

Bei sinkender Zulaufbelastung wird die Belastung zunächst auf die Hauptzonen (HBAC 2 u. NBAN) konzentriert. Die Bereitschaftszonen werden unter minimaler Belastung unter oben beschriebenen Bedingungen gefahren.

Bei steigender Belastung werden diese Bereitschaftsbecken sukzessive hochgefahren, wobei in der Spitze diese Becken in Richtung höher belastete Fahrweise (HBAC 2) gefahren werden. Der Obergang in diesen Belastungsbereich erfolgt erst, wenn die höher belastete Hauptzone ihren oberen Belastungsgrenzwert erreicht hat.

Mindestens werden so viel Zonen unter nitrifizïerenden Bedingungen (NBAN) gefahren, daß eine gemäß Zielanforderung ausreichende Nitrifikation bzw. Produktion von Nitrifikanten erreicht wird.

Die Steuerung der Belastungen in den Zonen erfolgt durch Änderung der Parameter: Zulaufmenge, Trockensubstanz, Sauerstoffzufuhr.

Aus den zugeleiten Massen und gegebenen Beckenvolumen ergeben sich die Raum- und Schlammbelastungen sowie die jeweiligen Kontaktzeiten und Schlammalter. Diese können entsprechend den Anforderungen eingestellt werden.

Vorzugsweise wird eine Trockensubstanz für (NBAN von 3 g/l, eher 4-6 g/l angestrebt. Die Höhe des jeweilig sinnvollen Wertes hängt von der notwendigen Pufferkapazität des Schlammes ab. Ein höherer Trockensubstanzwert erhöht die Pufferkapazität. Er wird verfahrensgemäße so hoch gewählt, daß entsprechend der im System auftretenden Belastungsschwankungen die zulässigen Belastungswerte für NBAN) und HBAC) nicht verlassen werden.

2. Die Belastungsverhältnisse in den höher und niedriger belasteten Beckenzonen (HBAC 2, NBAN) werden intervallweise gewechselt. Die Umschichtung erfolgt durch Hoch- und Herunterfahren der Belastungen in den Becken. Bei getrennten Schlammkreisläufen wird die Rücklaufschlammführung in verfahrensgemäßerweise ebenfalls gewechselt. Die Umschichtung erfolgt vorzugsweise im wöchentlichen Turnus.

3. Die Abbauzonen werden in geeigneter Weise als Kaskadenbecken ausgebildet.

4. Der Hochlastzone (HBAC 1) wird eine Groß-Denitrifikationszone vorgeschaltet. Den höher und medriger belasteten Zonen (HBAC 2, NBAN) wird eine Denitrifikationszone vor- und nachgeschaltet. Die Denitrifikationszonen werden variabel ausgelegt, d.h. sie werden nur bei Nitratzulauf denitrifizierend gefahren, ansonsten aber vollständig belüftet, entsprechend der höher oder niedriger belasteten Betriebsweise gefahren.

5. Der hoch- und höher belasteten Zone wird ein geeigneter Absetzbereich nachgeschaltet. Für die medriger belastete Zone ist eine Nachschaltung eines Absetzbereiches möglich.

6. Es erfolgt im gesamten Abbaubereich eine Ausrüstung mit abstellbaren Belüftern wobei die Belüftung für jede einzelne Zone und Kaskade einzeln geregelt werden kann. Die Einlaufbereiche der Zonen werden mit erhöhter Belüfterbestückung versehen.

7. Die Gesamtsteuerung der Anlage erfolgt über geeignete Meß- und Steuerglieder, die mikroprozessorgesteuert optimierend gefahren werden können.

8. Zur Erfüllung der Abbaufunktionen der höher und niedriger belasteten Zonen ohne Denitrifikationsfuntion kann statt einer Belebungsanlage das System erfindungsgemäß auch mit geeigneten anderen Abbauelementen wie (Tropfkörper oder Tauchtropfkörper etc.) kombiniert geschaltet werden.

Zusätzlich ist auch eine Komination und Zwischenschaltung anderer zusätzlicher Abbauelemente in verfahrensgemäßer Weise möglich. Die zusätzlichen Abbauelemente werden dabei in bekannter Weise betrieben.

Weitere Varianten des Verfahrens nach A und B sind:

1. Vorteilhaft kann das Verfahren durch Trennung der Schlammkreisläufe in den biologischen Abbauzonen erfolgen. Der in den Abbauzonen entstehende Schlamm wird dabei in geeigneter Weise in Absetzbereichen von dem Abwasser getrennt, wobei der in den hoch und höher belasteten Zonen entstehende Überschußschlamm, der nicht nitrifikantenreich ist, der Faulung direkt zugeleitet wird. Der Rücklaufschlammanteil wird dabei ggf. unter Zwischenschaltung von verfahrensgemäßen Phosphatrücklösestrecken diesen Zonen wieder zugeleiter.

Der in den niedriger belasteten Zonen entstehende Schlamm, der nitrifikantenreich ist, wird verfahrensgemäße nicht der Faulung direkt zugeleitet, sondern weitgehend im System gehalten. Der Rücklaufschlammanteil wird ggf. unter'Zwischenschaltung von verfahrensgemäßen Phosphatrücklösestrecken wieder diesen Bereichen zugeführt. Der Überschußschlammanteil wird als Katalysatorschlamm in verfahrensgemäßer Weise genutzt, wobei dieser nicht den Faulbereichen zugeleitet wird, sondern in geeigneter Weise den Aktivierungsbereichen bzw. nicht nitrifizierenden höher belasteten Zonen zugeleitet wird. Vorzugsweise erfolgt eine Zuleitung von diesen Überschußschlammanteilen nicht in Denitrifikationszonen, sondern in Zonen, die mit Sauerstoff beaufschlagt werden.

2. Ein Überschußschlammabzug aus nitrifikantenproduzierenden Bereichen wird frühestens dann vorgenommen, wenn die maximale Vermehrungsrate der Nitrifikanten erreicht ist, spätestens aber so, daß die Nitrifikanten in den Aktivierungsbereichen noch eine für den Abbau ausreichende Lebenszeit besitzen.

Die Vermehrungsrate ist variabel und dabei abhängig von der jeweiligen Temperatur, Belastungsverhältnisse, Zusammensetzung des Abwassers.

3. Eine weitere Erhöhung der Phosphatelimination kann durch Zwischenschaltung von Phosphatrücklösestrecken in erfindungsgemäßer Weise erfolgen. Dabei wird vorzugsweise nitratarmer Rücklaufschlamm, bei getrennten Schlammkreisläufen in getrennten erfindungsgemäßen anaeroben Rücklösezonen geleitet. Die Aufenthaltszeit des Schlammes in diesen Zonen beträgt 15 Minuten bis maximal 15 Stunden. Danach wird der rückgelöste Schlamm in erfindungsgemäßer Weise den biologischen Abbauzonen bzw. Aktivierungszonen zugeleitet. Die Führung kann im Haupt- oder Teilstrom erfolgen. Die Rücklösezonen werden dabei nicht mit zulaufendem Abwasser beaufschlagt.

Vorzugsweise erfolgt eine in Fließrichtung gerichtete zusätzliche Durchmischung.

Erfindungsgemäße Rücklösebereiche sind

    a) im Rückstau betriebene Kanäle, aufgestaute Sammelbecken, - schächte, -Trichter. (Nicht aber im Stapelbetrieb gefahrene Absetzbereiche in den biologischen Abbauzonen)

    b) nicht benutzte Kanal- bzw. Rohr- oder Fließstrecken.

c) vom Zulaufwasser abgetrennte Vorklärbeckenbereiche bzw. Belebungsbeckenbereiche. Diese Bereiche werden weder mit Abwasserstrom noch mit Primärschlammstrom beaufschlagt. Die Abtrennung von Vorklärbeckenbereichen erfolgt dabei nur insoweit, wie durch die hydraulischen Verhältnisse zulässig. Eine Abtrennung erfolgt auch nachrangig einer in den Aktivierungszonen durchgeführten Hydrolyse und Nitrifikation.

d) Bodenbereiche von Regenüberlaufbecken bzw. Vorklärbecken oder Zulaufkanälen.

e) nicht benutzte Eindicker

f) Nutzung von Voreindickern, wobei ein erhöhter Abzug von Verdrängungswasser betrieben wird. Hierbei ist der Abzug begrenzt durch eine unzulässige Beeinflussung der Eindickwirkung bzw. Energiegewinnung.

g) neu errichtete geeignete Behältnisse, soweit der gesamte Rücklaufschlamm über diese Puffer geleitet wird und die Bereiche nicht mit Abwasserstrom oder Primärschlamm beaufschlagt oder gemischt werden.

Die Behältnisse bestehen vorzugsweise aus einem im Zulaufbereich bestehenden Mischteil und nachfolgenden Sedimendations- und Rücklösebereich, wobei im Mischteil die zulaufende Masse von evtl. zugeleiteten Nitrat befreit wird. Eine Ausbildung in Form eines Schneckenstromprinzipes ist dabei günstig.

Die Rücklösezeit für den Teil eines nitrifikantenreichen Schlammes wird begrenzt durch die Zerstörung von Nitrifikanten. Die Rücklösezeit wird dabei so weit begrenzt, daß die zufließenden Nitrifikanten nicht abgetötet werden.

4. Zusätzlich kann dem Rücklösebereich ein Fällungsteil nachgeschaltet werden.

5. In erfindungsgemäßer Weise erfolgt zusätzlich eine Zuführung von Substrat zu dem Rücklösebereich. Das Substrat wird dabei in Form von Faulwasser, Verdrängungswasser, Filtrat oder Zentrat den genannten Bereichen zugeleitet. Die Zuleitung erfolgt verfahrensgemäß vorzugsweise direkt hinter den Absetzbereich aus der bilogischen Hauptzone, aber immer nach Abtrennung des Überschußsthlammes der zur Faulung geleitet wird als Zuleitung zu den rückzvlösenden Rücklaufschlamm.


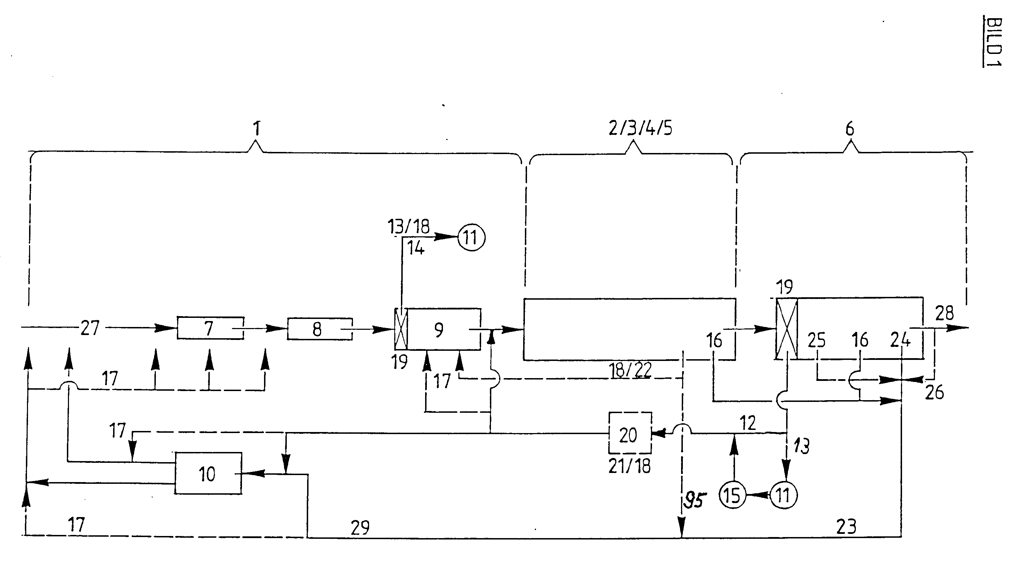

Beschreibung zu Bild 1

Das Bild zeigt die Grundschaltung in allgemeiner Weise nach A.

| | |
|---|---|
| 1.A | = Aktivierungsbereich nach A |
| 2.B | = Biologischer Abbaubereich (Hochlast bzw. Adsorptionsstufe) |
| 3.C | = Biologischer Abbaubereich (Biologische Hauptstufe) |
| 4.D | = Biologischer Abbaubereich (Zwischenbehandlungszone Absetzbereich) |
| 5.E | = Biologischer Abbaubereich (Restabbaustufe) |
| 6.F | = Nachklärbereich (Nachklärbecken) |
| 7.ELPW | = Einlaufpumpwerk |
| 8.SF | = Sand- und Fettfang |
| 9.VK | = Vorklärbecken |
| 10.RÜB | = Regenüberlaufbecken |
| 11.F | = Faulung |
| 12.RS | = Rücklaufschlamm |
| 13.US | = Überschußschlamm |
| 14.PS | = Primärschlamm |
| 15.SU | = Substrat aus Faulung (Verdrängungswasser, Filtrat, Zentrat etc.) |
| 16.SS | = Schwimmschlamm |
| 17. | = Möglicher Weg (gestrichelter Pfeil) |
| 18.( ) | = Mögliche Funktion (Funktion in Klammer oder gestrichelt) |
| 19.X | = Absetztrichter für Schlammabzug |
| 20.P | = Phosphatrücklösung |
| 21. | = Über Pufferbereich |
| 22.RLW | = Nitrifikantenreiches, nicht abgesetztes Kreislaufbzw. Abwasser |
| 23.RFW | = Nitrifikantenreiches, sauerstoffreiches abgesetztes Abwasser |

24. $RFW_0$ ...aus oberer Absetzzone

25. $RFW_{SE}$ ...aus oberen Schlammsedimentationsbereich

26. $RFW_{ABL}$ ...Rückfuhrwasser aus Ablaufkanal

27. = Zulauf des Abwassers

28. = Ablauf des Abwassers

29. = Fließrichtung des jeweiligen Stoffes (durchgezogener Pfeil)

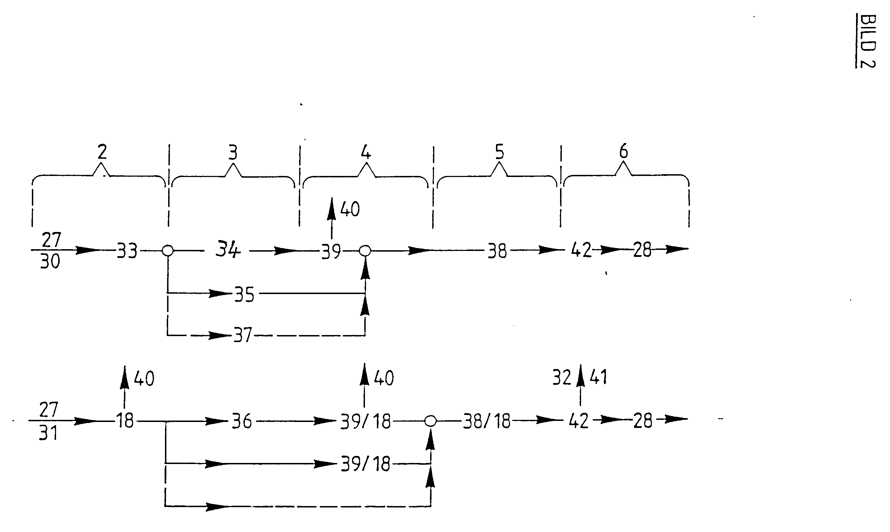

Bild 2 zeigt das allgemeine Funktionsschaubild für die Betriebsweise der biologischen Hauptstufe(n) nach B.

In Klammer gesetzte Werte und in gestrichelten Pfeilen gezeichnete Wege 18.D

30 - Nach 1. ist der Betrieb unter Weiterleitung eines Teilstromes nach $HBAC_1$ zu NBAN+C dargestellt.

31 - Nach 2. wird die bevorzugte Schaltung aufgezeigt.

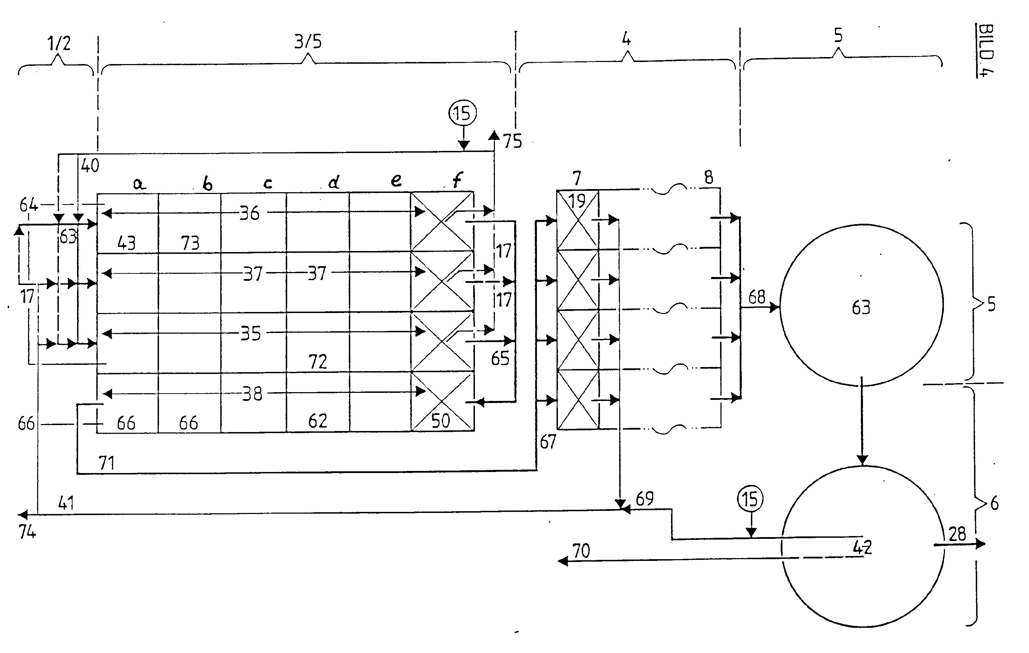

32 - Die Verteilung des Nitrifikantenschlammes ist hier nicht dargestellt, sondern im Bild 4 aufgezeigt.

33 - HBAC 1 = Hochbelastete Abbau- bzw. Adsorptionszone

34 - HBAC 2 = Höher belastete Abbauzone

35 - NBAN = Niedriger belastete Abbauzone für Nitrifikation

36 - (+N) = Nitrifikation möglich

37 - $(NBAN_B, HBAC_B)$ = Bereitschaftsbetrieb möglich

38 - NBAN+C = Niedriger belastete Nachbehandlungszone für Restdenitrifikation, -Nitrifikation, -Kohlenstoffabbau

39 - ABS = Absetzbereich

40 - $RS_C$ = Hochlast-Rücklaufschlamm, Nitrifikantenarm

41 - $RS_N$ = Nitrifikantenreicher Rücklaufschlamm

42 - NKB = Nachklärbecken

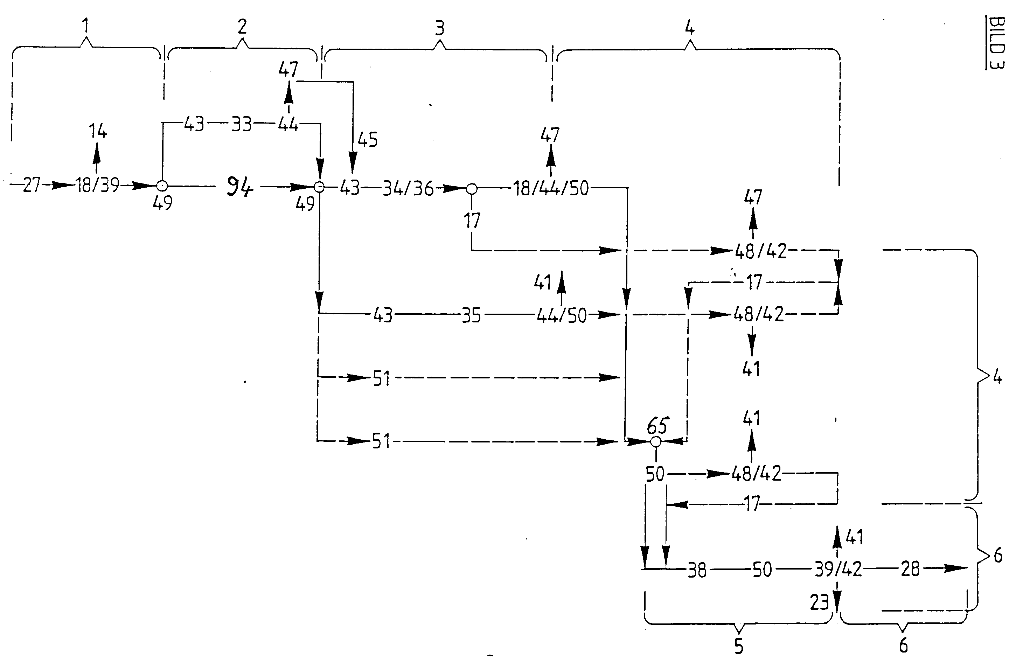

Bild 3 zeigt das ausführliche allgemeine Funktionsschaubild nach B.

Die sich wiederholenden Symbole sind nicht mehr erklärt, die Erklärungen sind in Bild 1 und 2 zu finden.

43 - (DN ) = Denitrifikation möglich und nur durchgeführt, wenn Nitrat ($NO_3$) im Zulauf.

44 - $ABS_{B10}$ = Grobentschlammungszone im biologischen Bereich

45 - S = Schlammzuführung im zweiten Hochlastbehandlungsbereich

46 - ABW = Abwasser

47 - $RSC_{1bis3}$ = Rücklaufschlamm aus Bereich 1 bzw. 2 bzw. 3 dto. für $RSN_{1bis4}$

48 - $ABS_{ZKB}$ = Absetzbereich Zwischenklärbecken

49 - = Mischbereich (Zusammenführung der Abwasserströme oder deren Trennung)

50 - DN = Denitrifikation

51 - (NBAN,HBAC) = Fakultative Bereitschaftsbecken

Bild 4 zeigt am Beispiel einer zweistufigen Anlage die verfahrensgemäße Schaltung nach B. mit den Schlammkreisläufen. (Erste Stufe Belebung 62, zweite Stufe Tropfkörper 63).

Die Bereiche und Bezeichnungen sind entsprechend Bild 3.

Das Abwasser durchläuft unter Aufteilung 63 die Kaskadenbecken 64 a, b, c, d, e, bis Kaskade f.

Dort wird der Abwasserstrom zusammengeführt 65 und in Straße vier geleitet 66.

Von dort gelangt das Abwasser in die Zwischenklärbereiche D (7 - 8) 67. Danach erfolgt der Restabbau in einem nachgeschalteten Tropfkörper 63, wobei das Abwasser,im Zulauf 68 weitgehend nitrifiziert ist.

Von der Nachklärung wird der nitrihkantenreiche Schlamm ($RSN_4$) 69 sowie das Rückfuhrwasser (RFW) 70 in verfahrensgemäßer Weise der Aktivierungszonen zugeleitet.

Die gestrichelten Pfeile zeigen an, daß der Weg und Zugabe abhängig ist von der ßetriebsweise der Becken.

71 = Abwasserfluß

63 - TK = Tropfkörper

72 - N = Nitrifikation

73 - C = Kohlenstoffabbau

74 - $ÜS_N$ = Überschußschlamm, nitrifikantenreich

75 - $ÜS_C$ = Überschußschlamm, nitrifikantenarm, Zuleitung zur Faulung.

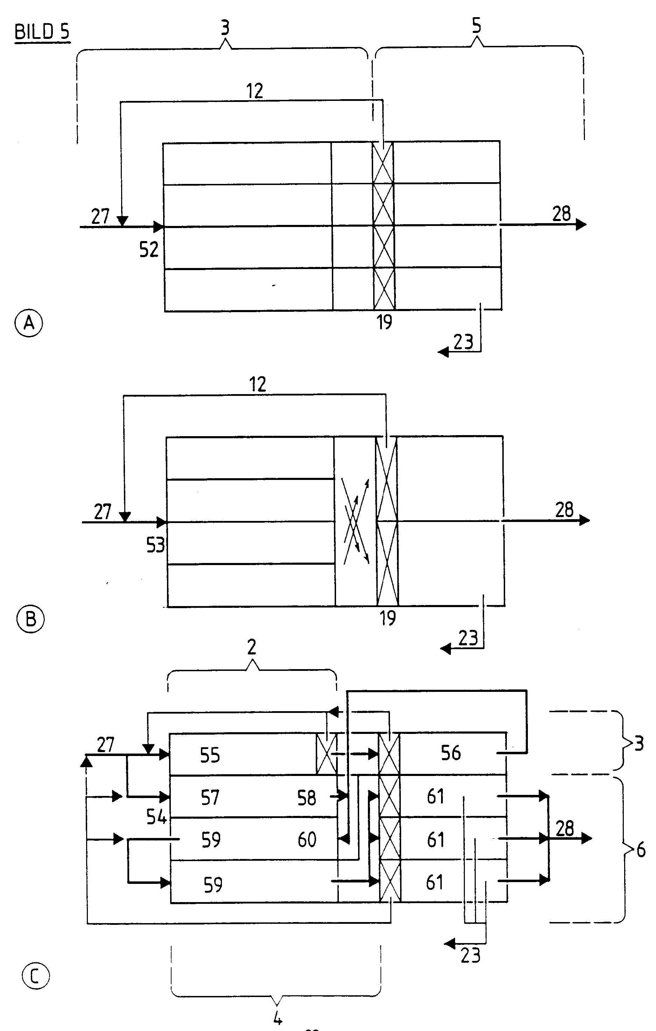

Bild 5 (a - c) zeigt drei beispielhafte Schaltungsarten.

Bild 5a. stellt die einfachste Schaltungsform dar.

52     - Die Belebung wird konstant niedrig belastet auf Nitrifikation gefahren. Die Aktivierung erfolgt in verfahrensgemäßer Weise über (RFW). 23

53     - Bild 5b zeigt die Funktionen der höher und niedriger belasteten Betriebsweise nach B. mit Rückfuhrfunktion 23 A. sowie Bereitschaftsbetrieb.

54     - In Bild 5 c ist ein Umrüstungsbeispiel einer Belebung in verfahrensgemäßer Weise aufgezeigt.
- Das Abwasser der höher belasteten Zone (HBAC) (55) wird hier in einem Zwischenklärbereich (ABS) abgesetzt; das Abwaser aus (NBAN) (57) wird mit dem abgesetzten Abwasser aus (HBAC) 55 gemischt (58) und der Nachbehandlungszone (59) zugeleitet und dort zunächst in verfahrensgemäßer Weise denitrifiziert (60).
Danach gelangt es über die drei Nachklärbereiche (NKB1-3) (61) in den Ablauf 28. Die Funktion und Ansprüche sind wie in 5b, jedoch mit erhöhter Absetzung nach der HBAC-Zone (56).

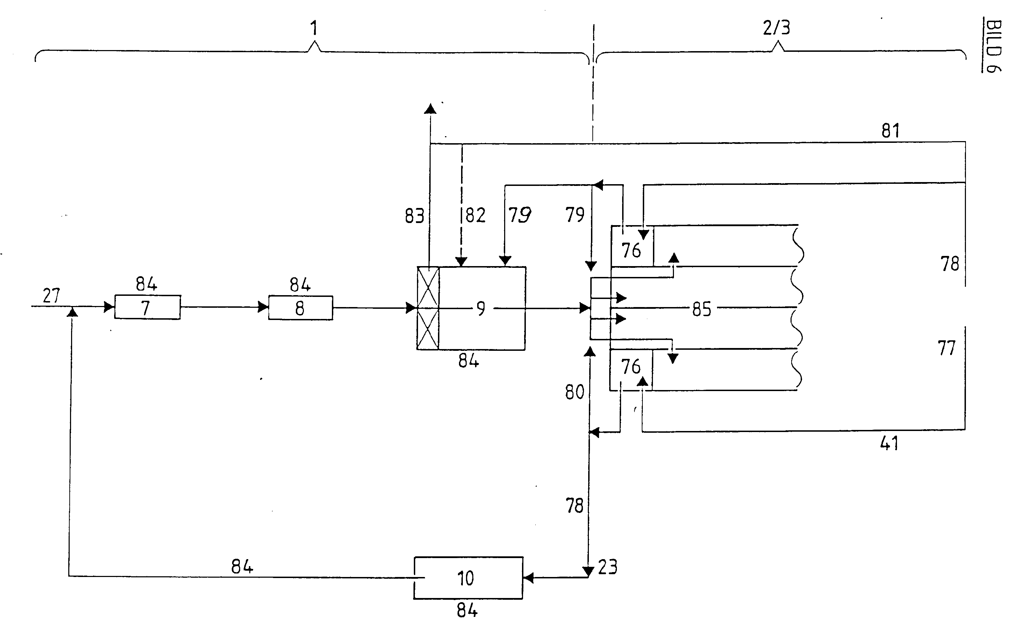

Bild 6 zeigt beispielhaft die erhöhte verfahrensgemäße Phosphatrücklösung ($PO_4$).

Dargestellt sind der Aktivierungsbereich (A) 1 sowie angedeutet der Eingangsbereich der biologischen Abbauzone (8).

Es werden getrennte Schlammkreisläufe dargestellt. ($RS_N$ 77, $RS_C$ 78)

Die Rücklaufschlämme durchlaufen eine erfindungsgemäß im Belebungsbecken abgetrennte Pufferzone (P) 76 und werden danach verfahrensgemäß in die Aktivierungsbereiche geleitet (79; $OS_{N,P-}$ 78, $RS_{C,P-}$ 79, $RS_{N,P-}$ 80).

Die Zuführung erfolgt im Beispiel für $OS_{N,P+}$ 77 über das (RÜB, 10 ELPW, 7 SF, 8) unter Zumischung von (RFW) 23 Dort findet Phosphoraufnahme, Hydrolyse und Nitrifikation statt.

Zur verstärkten Denitrihkation bzw. zur verbesserten Schlammabsetzung für ($ÜS_C$) 81, kann dem Vorklärbecken $ÜS_C$-Schlamm zugeführt werden 82. Der Abzug erfolgt über den Primärschlamm (PS,P+) 83.

76 - P-            =Phosphatrücklösung (phosphatarm)

84 - P+            =Phosphataufnahme (phosphatreich)

85 - BB            =Belebungsbecken

78 - $OS_{C,P+}$        =Überschußschlamm, phosphatreich

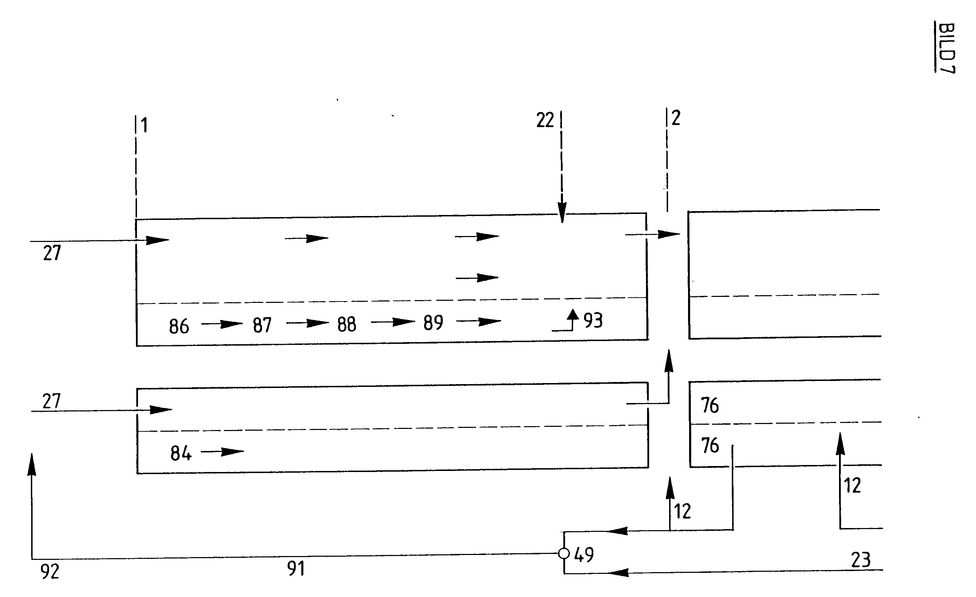

Bild 7 zeigt allgemein den Abbau und Umbauprozess, der durch die Aktivierung der vorbehandlungszone 1 nach erfindungsgemäßem Verfahren eingeleitet bzw. erheblich und gezielt verstärkt wird.

86 - $N_{ORG}$      = Organischer Stickstoff

87 - $NH_4$       = Ammonium

88 - $NO_2$       = Nitrit

89 - $NO_3$       = Nitrat

90 - $PO_4$       = Phosphat

91 - $P-_{Arm}$     = Sauerstoff

92 - $O_2$        = Sauerstoff

93 - $N_2$        = Stickstoff geht in Luft über.

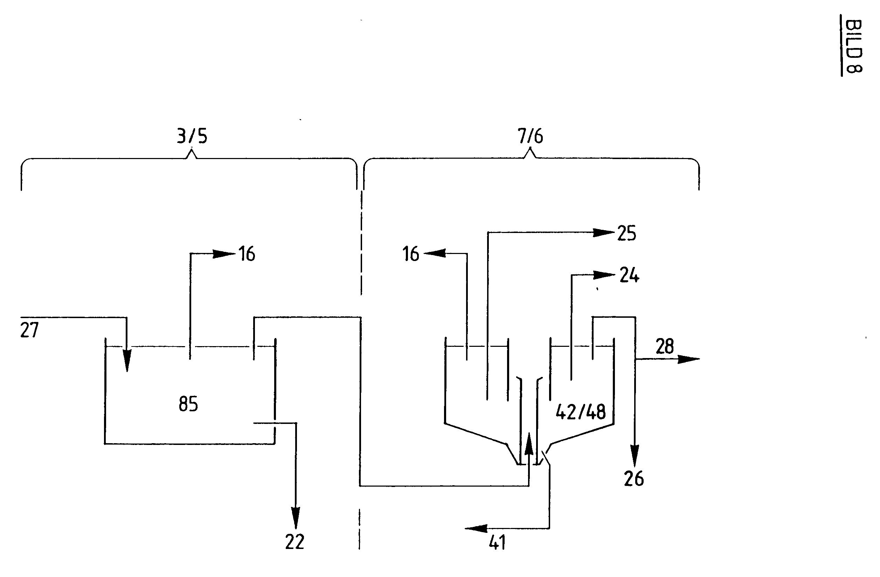

Bild 8 erläutert die Abzugsformen des nitrihkantenund sauerstoffreichen Abwasser/Schlammgemisches, wobei das Gemisch bei

$RFW_{ABL}$       nach dem Absetzvorgang im Ablauf abgezogen wird,

bei $RFW_O$      am Ende des Absetzvorganges im Absetzbecken 24,

bei $RFW_{SE}$     im Absetzbecken im Sedimentationsbereich des Abwassers 25,

bei $RS_N$        über die Rücklaufschlammleitung 41,

bei SS          über den Schwimmschlammabzug 16,

bei RLW       als nicht abgesetztes Abwasser über Abzug aus der Belebung 22.

94             Durchlaufstrecke

95             nitrifikantenreiches, nitratarmes Kreislaufwasser

## Patentansprüche

1. Verfahren zur Abwasserreinigung in technischen Abwasserreinigungsanlagen, in denen eine Umwandlung und Ausscheidung von Stickstoff durch biologische Nitrifikation und Denitrifikation erfolgt, wobei das Abwasser mindestens einen aeroben biologischen Bereich (2, 3, 4, 5) durchläuft und mindestens ein Teilstrom nitrifizierend behandelt wird, wobei aus einem nitrifizierenden Bereich (35, 38), der eine niedriger belastete Abbauzone für Nitrifikation oder eine niedriger belastete Nachbehandlungszone für Nitrifikation ist, ein nitrifikantenreiches Wasser-Schlamm-Gemisch (23, 41), bestehend aus nitrifikantenreichem, sauerstoffreichem abgesetztem Abwasser und/oder nitrifikantenreichem Rücklaufschlamm, in mindestens einen Bereich (1, 27, 7, 8, 9, 33, 34) geführt wird, der nicht gezielt nitrifizierend gefahren wird, dadurch gekennzeichnet, daß das Wasser-Schlamm-Gemisch (23, 41) sauerstoffreich ist, daß eine gezielte biologische Aktivierung durch Rückführung des nitrifikantenreichen und sauerstoffreichen Wasser-Schlamm-Gemischs (23, 41) in mindestens einen der folgenden vom Abwasser früher durchflossenen Aktivierungsbereiche (1, 27, 7, 8, 9) erfolgt:

– Zulaufkanal oder -strecke (n) (27),
– Einlaufpumpwerk mit Sammelschacht (ELPW) (7),
– Sand- und Fettfang (SF) (8),
– Regenüberlaufbecken (RÜB) (10),
– Vorklärbecken (VKB) (9),
– alle Zulaufstrecken, -sammler und Pufferbereiche, becken bis zur biologischen Hauptstufe (3), und daß die gezielte Aktivierung dabei in folgender Weise erfolgt:

a) mindestens erfolgt die Aktivierung der Aktivierungsbereiche (7, 8, 9, 10, 27) zur frühzeitigen Nitrifikation, Hydrolyse und/oder erhöhten Phosphataufnahme, wobei nitrifikantenreiches und sauerstoffreiches Abwasserschlammgemisch (23, 41) und/oder zusätzlich phosphatarmer, nitrifikantenreicher Überschußschlamm (91) zugeführt wird; oder

b) zusätzlich zu a) werden die Aktivierungsbereiche (7, 9, 10, 27) zur Phosphatrücklösung unter Zuleitung von phosphatreichen, nitratarmen Rücklaufschlamm genutzt, wobei keinerlei Zuführung von Sauerstoff erfolgt; oder

c) nachfolgend zusätzlich zu a) erfolgt eine Aktivierung des Vorklärbeckens zur erhöhten Denitrifikation durch zusätzliche Zuleitung von nitratreichen, nicht abgesetzten Kreislaufwasser.

2. Verfahren nach Anspruch 1, dadurch gekennzeichnet, daß ein Teil des Abwassers in einer höher belasteten Zone (34) (HBAC 2) und der andere Teil in einer parallel dazu geschalteten niedriger belasteten, für die Nitrifikation günstigen Zone (NBAN) (35) behandelt wird, aus der das nitrifikantenreiche und sauerstoffreiche Wasser-Schlamm-Gemisch (23, 41) in dieser höher belastete Zone (34) (HBAC 2) geführt wird.

3. Verfahren nach Anspruch 1, dadurch gekennzeichnet, daß ein Teil des Abwassers in einer höher belasteten Zone (34) (HBAC 2) und der andere Teil in einer parallel dazu geschalteten niedriger belasteten Zone (35) (NBAN) behandelt wird und daß die beiden Abwasserströme anschließend zusammengeführt (65) werden.

4. Verfahren nach Anspruch 1, dadurch gekennzeichnet, daß eine weitere Erhöhung der Phosphatelimination durch Einschaltung von Phosphatrücklösestrecken (20, 76) im Rücklaufschlamm-Kreislauf (12, 79) erfolgt.

5. Verfahren nach Anspruch 4, dadurch gekennzeichnet, daß als Rücklösebereiche gewählt werden:

a) im Rückstau betriebene Kanäle (27), aufgestaute Sammelbecken, -schächte, -Trichter, nicht aber im Stapelbetrieb gefahrene Absetzbereiche in den biologischen Abbauzonen (4, 6);

b) nicht benutzte Kanal- bzw. Rohr- oder Fließstrecken;

c) vom Zulaufwasser abgetrennte Vorklärbeckenbereiche bzw. Belebungsbeckenbereiche (76), die weder mit Abwasserstrom noch mit Primärschlammstrom beaufschlagt werden;

d) Bodenbereiche von Regenüberlaufbecken bzw. Vorklärbecken oder Zulaufkanälen (10);

e) nicht benutzte Eindicker;

f) Voreindickern, wobei ein erhöhter Abzug von Verdrängungswasser betrieben wird; oder

g) neu errichtete Behältnisse (20), soweit der gesamte Rücklaufschlamm über diese Puffer geleitet wird und die Bereiche nicht mit Abwasserstrom (27) oder Primärschlamm (14) beaufschlagt oder gemischt werden.

6. Verfahren nach Anspruch 4, dadurch gekennzeichnet daß dem Rücklösebereich (20, 76) ein Fällungsteil nachge schaltet wird.

7. Verfahren nach Anspruch 4, dadurch gekennzeichnet, daß eine zusätzliche Zuführung von Substrat (15) In Form von Faulwasser, Verdrängungswasser, Filtrat oder Zentrat zu dem Rücklösebereich (20, 76) nach Abtrennung des Überschußschlammes (13) erfolgt, der zur Faulung geleitet wird.

8. Verfahren nach Anspruch 1, dadurch gekennzeichnet, daß die Rückführung aus dem oberen Sedimentations- oder Ablaufbereich (16, 24, 25) erfolgt.

9. Verfahren zur Abwasserreinigung nach Anspruch 1, dadurch gekennzeichnet, daß die Rückführung vor dem Einlaufbereich (27) der Anlage erfolgt.

10. Verfahren nach Ansprüchen 2 und 3, dadurch gekennzeichnet, daß aus dem nitrifizierenden Bereich (35, 38, 37) Überschuß- bzw. Rücklaufschlamm abgezogen und dem nicht gezielt nitrifizierend gefahrenen Bereich (34, 36) zugeführt wird (33).

9

11. Verfahren nach Anspruch 2 oder 3, dadurch gekennzeichnet, daß das Abwasser eine Hochlaststufe (33) (HBAC 1) durchläuft, daß ein Teil des Abwassers über eine normale Durchlaufstrecke (94) ohne weitere Behandlung in einer biologischen Hauptstufe (3) der Abwasserreinigungsanlage weitergeleitet wird und daß beide Teile des Abwassers in einer niedriger belasteten Zone (35) (NBAN) und (HBANC 2) (34) aufgeteilt und behandelt werden, und daß die beiden Teile des Abwassers einer gemeinsamen Weiterbehandlung nach Zusammenführung des höher und niedriger belasteten Abwassers (65) in einer nachgeschalteten Zone (NABN+C) (38) gemeinsam weiterbehandelt werden.

12. Verfahren nach Anspruch 11, dadurch gekennzeichnet, daß das Abwasser in der höher belasteten Zone (34) (HBAC 2) unter Bedingungen behandelt wird, die für die Vermehrung der schnell wachsenden chemoorganotrophen Bakterien günstig sind.

13. Verfahren nach Anspruch 12, dadurch gekennzeichnet, daß die höher belastete Zone (HBAC 2) (34) und die Hochlaststufe (HBAC 1) (33) entweder zur erhöhten Energiegewinnung mit erhöhter Schlammproduktion gefahren oder zur erhöhten Phosphataufnahme mit entsprechend verlängerter Belüftungszeit und höherem Schlammalter gefahren werden.

14. Verfahren nach Anspruch 1, dadurch gekennzeichnet, daß die Denitrifikation (50) am Beginn der bzw. nach Abschluß der Nitrifikation gesonderten Nachbehandlungszone (NBAN+C) (38) erfolgt.

15. Verfahren nach einem der Ansprüche 2, 3, 9, 11 oder 13 dadurch gekennzeichnet, daß eine Schlammtrennung zwischen den höher (33, 34) und den niedriger belasteten Zonen (35, 38) erfolgt, daß der höher belasteten Zone ein Absetzbereich (44, 55) nachgeschaltet wird und daß die Schlammführung der Hochlaststufe (HBAC 1) (33) und der höher belasteten Zone (HBAC 2) (34) getrennt von den niedriger belasteten Zonen (35) (NBAN, NBAN+C) (38) erfolgt.

16. Verfahren nach Anspruch 1, dadurch gekennzeichnet, daß eine Zumischung von nitrifikantenreichem Schwimmschlamm (16) aus einem Zwischen- (4) bzw. Nachklärbereich (6) der Abwasserreinigungsanlage erfolgt.

17. Verfahren nach Anspruch 1, dadurch gekennzeichnet, daß eine zusätzliche Zumischung von nitrifikantenreichem Überschußschlamm (69) sowie nicht abgesetztem nitrifikantenreichem nitratarmem Kreislaufwasser (95) zu den Aktivierungszonen (1) erfolgt.

18. Verfahren nach Anspruch 1, dadurch gekennzeichnet, daß nitrifikantenreichen Schlämme (41) der Abwasser-reinigungsanlage vor Zumischung zum Abwasser-Schlamm-Gemisch (23) bzw. Zuleitung in die Aktivierungsbereiche (1) einer Phosphatrücklösung (20) unterzogen werden.

19. Verfahren nach Anspruch 1, dadurch gekennzeichnet, daß die den Aktivierungsbereichen zugeleiteten Massen vor ihrer Zuführung in den biologischen Hauptstufen (2, 3, 4, 5) denitrifiziert werden.

20. Verfahren nach Anspruch 1, dadurch gekennzeichnet, daß der den Aktivierungsbereichen (1) zugeleitete nitrifikantenreiche Schlamm (41) in der Zugabemenge durch die Bedarfsmenge an Nitrifikanten in der biologischen Hauptstufe (35, 37) begrenzt wird.

21. Verfahren nach Anspruch 1, dadurch gekennzeichnet, daß die Zugabemenge des nitrifikantenreichen Schlammes (41) in die Aktivierungszonen (1) bei Regenwetter so weit erhöht wird, daß der eingetragene Sauerstoff durch die Aktivierung weitestgehend in den Aktivierungszonen (1) verbraucht wird.

22. Verfahren nach Anspruch 1, dadurch gekennzeichnet, daß der Abzug von Rückführungswasser (23,. 24, 25, 26) aus den Klarwasser- und Sedimentationszonen der Absetzbereiche (42, 48) variabel erfolgt, so daß durch erhöhten Abzug aus der Sedimentationszone (42, 48) der Schlammanteil im Rückführungswasser (23, 24, 25, 26, 70) erhöht wird.

23. Verfahren nach Anspruch 1, dadurch gekennzeichnet, daß zusätzlich zur Rückführung des Abwasser-Schlamm-Gemischs (41, 23) nitratreiches Kreislaufwasser (89) aus der Abwasserreinigungsanlage abgezogen und direkt einem Aktivierungsbereich zugeführt wird, der anderen Aktivierungsbereichen nachgeschaltet ist, die der Hydrolyse (86) und Nitrifikation (87, 88, 89) dienen.

24. Verfahren nach Anspruch 1, dadurch gekennzeichnet, daß die Aktivierungsbereiche (1) und Fließstrecken für das Rückführungswasser über abstellbare Belüftungssysteme zusätzlich belüftet werden (92).

25. Verfahren nach Anspruch 1, dadurch gekennzeichnet, daß eine zusätzliche Nachbelüftung des Abwasser-Schlamm-Gemischs (23, 41) im Endbehandlungs- (63) bzw. Abzugsbereich nach dem Absetzvorgang des Abwassers in einem Nachklärbereich (42, 48) der Abwasserreinigungsanlage erfolgt.

26. Verfahren nach einem oder mehreren der Ansprüche 2 - 15, bis 12, dadurch gekennzeichnet, daß die höher belastete Zone (HBAC 2) (34, 32) und die niedriger belastete Zone (NBAN) (35) in ihren gewählten Optimalbereichen gefahren werden und daß weitere Parallelzonen (37, 51) belastungsabhängig in der Weise gefahren werden, daß sie bei niedriger Gesamtzulaufbelastung energieminimierend, aber nitrifzierend bzw. intervallweise nitrifizierend und denitrifzierend ohne Mischen gefahren werden.

27. Verfahren nach Anspruch 26, dadurch gekennzeichnet, daß entsprechend der reduzierten Zulaufbelastung eine niedrigere Sauerstoffzufuhr erfolgt.

28. Verfahren nach Anspruch 27, dadurch gekennzeichnet, daß die niedrigere Sauerstoffversorgung so gefahren wird, daß eine schnelle Aktivierung in dem Sinne möglich ist, daß die Biozönose bei steigender Zulaufbelastung im zulässigen Belastungsbereich bleibt und die erforderliche zusätzliche Sauerstoffzufuhr bei Belastungserhöhung nicht gröber ist als wenn diese Zone dauernd unter konstanter Sauerstoffzufuhr gefahren würde.

29. Verfahren nach Anspruch 26, dadurch gekennzeichnet, daß bei sinkender Zulaufbelastung die Belastung zunächst auf die Hauptzonen (HBAC 2 (34), NBAN (35)) konzentriert wird und die weiteren Parallelzonen (37) (Bereitschaftazonen) unter minimaler Belastung gefahren und bei steigender Belastung sukzessive hochgefahren werden.

30. Verfahren nach Anspruch 28 und 29, dadurch gekennzeichnet, daß eine schnelle Aktivierung der Bereitschaftszonen durch Zuführung externer Biomasse aus den Hauptzonen (34, 35) erfolgt.

31. Verfahren nach Anspruch 5 oder 6 und 8, dadurch gekennzeichnet, daß die Belastungsverhältnisse in der höher belasteten Zone (34) (HBAC 2) und in der niedriger belasteten Zone (35) (NBAN) intervallweise gewechselt werden.

32. Verfahren nach Anspruch 5 oder 6 und 8, dadurch gekennzeichnet, daß die Abbauzonen als Kaskadenbecken (3,5) ausgebildet werden.

33. Verfahren nach Anspruch 5 oder 6 und 8 dadurch gekennzeichnet, daß der Hochlastzone (33) (HBAC 1) eine Groß-Denitrifikationszone (43) vorgeschaltet und der höher belasteten Zone (34, 36) (HBAC 2) und der niedriger belasteten Zone (35) (NBAN) eine Denitrifikationszone (43, 50) vor- und nachgeschaltet wird.

34. Verfahren nach Anspruch 5, 6 und 8, dadurch gekennzeichnet, daß der Hochlastzone (33) (HBAC 1) und der höher belasteten Zone (34) (HBAC 2) und/oder der niedriger belasteten Zone (35) (NBAN) jeweils ein Absetzbereich (34) nachgeschaltet wird.

35. Verfahren nach Anspruch 5 oder 6, 4 und 8 dadurch gekennzeichnet, daß die Belüftung für jede einzelne Zone bzw. Kaskade (64) mit einzeln regelbaren bzw. abstellbaren Belüftern erfolgt.

36. Verfahren nach Anspruch 5 oder 6 und 8, dadurch gekennzeichnet, daß die Abbaufunktion der höher und niedriger belasteten Zonen ohne Denitrifikationsfunktion mittels einer Belebungsanlage oder mit anderen Abbauelementen wie Tropfkörper oder Tauchtropfkörper gegebenenfalls auch in Kombination erfolgt.

37. Verfahren nach Anspruch 5 oder 6 und 8, dadurch gekennzeichnet, daß eine Trennung der Schlammkreisläufe in den biologischen Abbauzonen erfolgt, wobei der in den hoch und höher belasteten Zonen entstehende Überschußslamm (40, 47, 75) direkt der Faulung zugeleitet wird und der in den niedriger belasteten Zonen entstehende Schlamm (19, 41) nicht der Faulung direkt zugeleitet, sondern weitgehend im System gehalten wird.

38. Verfahren nach Ansprüchen 4 und 37, dadurch gekennzeichnet, daß Rücklaufschlamm aus der höher belasteten Zone (33, 34, 36) und der Gesamtschlamm der niedriger belasteten Zone (35, 37, 38) bei getrennten Schlammkreisläufen in getrennte anaerobe Rücklösezonen (76) geleitet werden.


## Claims

1. Process for wastewater treatment in technical wastewater treatment plants, in which a conversion and removal of nitrogen is achieved via biological nitrification and denitrification, consisting essentially of: wastewater passing at least one aerobic biological area (2,3,4,5); nitrifying at least one partial stream of said wastewater; feeding back a water/sludge mixture (23,41) into at least one area (1,27,7,8,9,33,34), which is not specifically operated for nitrification; said water/sludge mixture (23,41) consisting of sedimented wastewater with a high concentration of nitrifiers and a high concentration of oxygen and/or feedback sludge with a high concentration of nitrifiers; said sludge (23, 41) being withdrawn from a nitrifying zone (35, 38), which is a lower loaded decomposition zone for nitrification or a lower loaded final treatment zone operated for nitrification having a high concentration of oxygen. being fed back for intentional biological activation of at least one of the following activation zones (1,27,7,8,9) which the fresh wastewater passes:
   – Intake conduit or intake line (n) (27),
   – Inlet pumping unit with collector (ELPW) (7),
   – Sand and grit removal
   – Rain overflow tank (RUEB) (10),
   – Presedimentation tank (VKB) (9),
   – All intake lines, collection devices, buffer zones, and buffer tanks before the biological main stage (3),
   the specific activation being accomplished in the following manner:
   a.) At least, the activation of the activation areas (7,8,9,10,27) is accomplished by admixing the water/sludge mixture (23,41) and/or additional excess sludge (91), and is directed towards early nitrification, hydrolysis, and/or increased phosphate retention; said water/sludge mixture having a high concentration of nitrifiers and oxygen; said excess sludge having a low concentration of phosphate and a high concentration of nitrifiers; or

b.) in addition to a.), activation areas (7,9,10,27) are utilized for phosphate release by admixing recycle sludge that has a high concentration in phosphate and a low concentration in nitrate, while no oxygen is admitted; or

c.) subsequently and in addition to a.) the presedimentation tank is activated for increased denitrification by means of additional admixing of recycle water that has a high concentration of nitrates and is not settled.

2. Process as defined in claim 1, wherein a portion of the wastewater is treated in a higher loaded zone (34) (HBAC 2), and the remainder is treated in a lower loaded zone (NBAN) (35), which is operated in parallel to said higher loaded zone and operated to favor nitrification; from said lower loaded zone (NBAN) (35), the water/sludge mixture (23,41) is withdrawn and admitted into said higher loaded zone (34) (HBAC 2).

3. Process as defined in claim 1, wherein a portion of the wastewater is treated in a higher loaded zone (34) (HBAC 2), and the remainder is treated in a lower loaded zone (35) (NBAN), which is operated in parallel to the higher loaded zone; said wastewater flows being combined (65) thereafter.

4. Process as defined in claim 1, wherein increased phophate elimination is achieved by means of interposing phosphate release zones (20,76) in the return sludge lines (12, 79).

5. Process as defined in claim 4, wherein the following areas are operated for release:

a.) conduits (27), that are operated in a backwash regime, retaining collection basins, collection compartments, and collection funnels; however, not settling zones of the biological main stages (4,6) that are operated in a plug flow regime;

b.) not utilized canals, pipes, or other lines;

c.) zones of the presedimentation tank or, respectively, zones of the biological activation areas (76), that are separated from inflowing wastewater, and in which neither wastewater nor primary sludge is admitted.

d.) bottom zones of rain overflow basin or, respectively, presedimentation basins, or inlet lines (10);

e.) not utilized thickeners;

f.) pre-thickeners, if said pre-thickeners are operated for increased withdrawal of displacement water; or

g.) containers (20) designed for the application of this invention, if the recycle sludge in total is fed into said buffers, and wastewater stream (27) or primary sludge (14) is not fed into or admixed to said areas.

6. Process as defined in claim 4, wherein a flocculation unit is interposed after the release section (20, 76).

7. Process as defined in claim 4, wherein additional substrate (15), in the form of digested water, displacement water, filtrate of centrate, is admixed to the release zones (20,76) after separation of the excess sludge (13), which in turn is discharged into a digestion zone.

8. Process as defined in claim 1, wherein the recycling stream is withdrawn from the upper sedimentation zone or as supernatent of (16,24,25).

9. Process as defined in claim 1, wherein the recycling takes place before the intake area (27) of the plant.

10. Process as defined in claims 2 and 3, wherein excess sludge or, respectively, return sludge is withdrawn from the nitrifying zones (35, 38, 37); said excess sludge or return sludge being admitted into zones (34, 36), which are not specifically operated for nitrification (33).

11. Process as defined in claims 2 or 3, wherein the incoming wastewater passes a high-loaded zone (33) (HBAC 1), and wherein a portion of said wastewater passes a regular bypass line (94) without additional treatment and subsequently flows into a biological main stage (3) of the wastewater treatment plant; both partial streams of the wastewater being combined and subsequently divided into a low-loaded zone (35) (NBAN) and a high-loaded zone (HBAC 2) (34) and treated in said zones; both last-mentioned partial streams being combined after the treatment (65) and being further treated as a whole in a following zone (NBAN+C) (38).

12. Process as defined in claim 11, wherein the wastewater in the high-loaded zone (34) (HBAC 2) is treated under conditions that favor the proliferation of the fast-growing chemoorganothropic bacteria.

13. Process as defined in claim 12, wherein the higher loaded zone (HBAC 2) (34) and the high-loaded zone (HBAC 1) (33) are operated either for increased energy generation with increased sludge production, or for increased phosphate retention; said increased phosphate retention is achieved with appropriately extended aeration time and at a higher sludge age.

14. Process as defined in claim 1, wherein denitrification (50) occurs at the beginning or end of a separate final treatment zone (NBAN+C) (38).

15. Process as defined in one of the claims 2, 3, 9, 11 or 13, wherein the sludge withdrawn from the higher loaded zones (33, 34) and the lower loaded zones (35, 38) is kept separate; and wherein a settling zone (44, 55) follows said higher loaded zone; the sludge recycle systems of high-loaded zone (HBAC 1) (33) and the higher loaded zone (HBAC 2) (34) being kept separate from the lower loaded zones (35) (NBAN, NBAN+C) (38).

12

16. Process as defined in claim 1, wherein swim sludge that has a high concentration of nitrifiers (16) is withdrawn from intermediate treatement stage (4) or, respectively, from a final sedimentation stage (6) and admixed to the recycle stream.

17. Process as defined in claim 1, wherein excess sludge (69) as well as recycle water (95) is admixed additionally to activation zones (1); said excess sludge has a high concentration of nitrifiers (69), and said recycle water (95) is not settled, has a high concentration of nitrifiers, and a low concentration of nitrate.

18. Process as defined in claim 1, wherein sludge streams (41) are treated for phosphate release (20) before admixture to the wastewater/sludge mixture (23) or before admitting to the activation stages (1), respectively; said sludge streams (41) originating from the wastewater treatment plant and having a high concentration of nitrifiers.

19. Process as defined in claim 1, wherein the streams that are admitted to the activation stages are subject to denitrification before said streams are admitted to the biological main stages (2, 3, 4, 5).

20. Process as defined in claim 1, wherein the quantity of the sludge (41) that is admitted to the activation stages (1) is limited by the quantity of nitrifiers required in the biological main stages (35, 37); said sludge having a high concentration of nitrifiers.

21. Process as defined in claim 1, wherein, in the case of rainy weather, the quantity of sludge that is admitted to the activation stages (1) is increased so that nearly all of the additional oxygen due to the rain condition is depleted in the activation stages (1); said sludge having a high concentration of nitrifiers.

22. Process as defined in claim 1, wherein recycle water (23, 24, 25, 26) is withdrawn as supernatant and from the sedimentation zones of the settling zones (42, 48) at a flexible rate, so that the sludge contents in the recycle water (23, 24, 25, 26, 70) increases with increased withdrawal from sedimentation zones (42, 48).

23. Process as defined in claim 1, wherein recycle water (89) is withdrawn from the wastewater treatment plant and directly transferred to an activation stage that is connected after other activation stages; said recycle water (89) being recycled in addition to the recycling of the wastewater/sludge mixture (41, 23), and having a high concentration of nitrate; said other activation stages being operated for hydrolysis (86) and nitrification (87, 88, 89).

24. Process as defined in claim 1, wherein aeration systems are used for additional aeration (92) of the activation stages (1) and of the conduits for the recycle streams; said aeration systems capable of being shut off.

25. Process as defined in claim 1, wherein the wastewater/sludge mixture (23 ,41) is aerated additionally in the final treatment zone (63) or, respectively, at the withdrawal zone; said withdrawal zone being positioned after the settling process of the wastewater in a final sedimentation zone (42, 48) of the wastewater treatment plant.

26. Process as defined in one or more of claims 2 to 15, wherein the higher loaded zone (HBAC 2) (34, 32) and the lower loaded zone (NBAN) (35) are operated in their respective optimal operating ranges and additional parallel zones (37, 51) are operated depending on the loading; in the case of the total loading of inflowing wastewater being low, said additional parallel zones being operated to minimize energy consumption, but nitrifying the wastewater or, respectively, in intervals nitrifying and denitrifying the wastewater without mixing.

27. Process as defined in claim 26, wherein less oxygen is admitted proportional to the reduced total loading of the inflowing wastewater.

28. Process as defined in claim 27, wherein the low level of oxygenation is controlled for a fast activation; said fast activation being defined as operating the biocenosis at the permissible loading range in the case of increased wastewater influent loading, and the additional oxygen admission in the case of increasing loadings being not higher than if said zone is operated at a constant level of oxygenation.

29. Process as defined in claim 26, wherein, in the case of decreasing influent loadings, initially the loading is concentrated in the main stages (HBAC 2 (34), NBAN (35)), and the additional parallel zones (37) (contingency zones) are operated with a minimum loading; the loading of said additional parallel zones (37) being gradually increased in the case of increasing influent loadings.

30. Process as defined in claims 28 and 29, wherein external biomass from the main stages (34, 35) is admitted to said contingency zones for their fast activation.

31. Process as defined in claims 5 or 6 and 8, wherein the loading of the higher loaded zone (34) (HBAC 2) and the lower loaded zone (35) (NBAN) is alternated.

32. Process as defined in claims 5 or 6 and 8, wherein the decomposition zones are designed as partitioned tanks resembling a cascade (3, 5).

33. Process as defined in claim 5 or 6 and 8, wherein the wastewater passes a large-scale denitrification zone (43) before being sent to the high-loaded zone (33) (HBAC 1) and wherein the wastewater passes a denitrification zone (43, 50) before and after the higher loaded zone (34, 36) (HBAC 2) and the lower loaded zone (35) (NBAN).

34. Process as defined in claims 5, 6 and 8, wherein the wastewater passes a sedimentation zone (34) each, after the high-loaded zone (33) (HBAC 1) and the higher loaded zone (34) (HBAC 2) and/or the lower loaded zone (35) (NBAN).

35. Process as defined in claims 5 or 6, 4 and 8, wherein the aeration level of each zone or, respectively, cascade (64), can be controlled and/or shut off.

36. Process as defined in claims 5 or 6 and 8, wherein decomposition is achieved in the higher and lower loaded zones without denitrification by means of an activated sludge plant or with other means for decomposition, e.g. trickling filters or immersed trickling filters, or a combination thereof.

37. Process as defined in claims 5 or 6 and 8, wherein the sludge recycle systems in the biological treatment stages are kept separate; excess sludge (40, 47, 75) of said sludge recycle system generated in the high-loaded or higher loaded zones is transferred directly into a digestion stage; sludge orginating from the lower loaded zone (19, 41) being not directly transferred into digestion, but being kept in the system to the greatest extent possible.

38. Process as defined in claims 4 and 37, wherein return sludge from the higher loaded zone (33, 34, 36) and the total sludge of the lower loaded zone (35, 37, 38) is kept separate and is admitted into separate anaerobic release zones (76).


## Revendications

1. Procédé de traitement d'eau usée dans des stations d'épuration techniques où ont lieu une transformation et une élimination de l'azote par nitrification et dénitrification biologiques, au cours desquelles l'eau usée traverse au moins une zone biologique aérobie (2,3,4,5) et dont un flux partiel subit un traitement nitrifiant en ce sens qu'un mélange eau-boue, riche en nitrificateurs (23,41), composé d'eau usée décantée riche en nitrificateurs et oxygène et/ou de boue de retour riche en nitrificateurs, est amené d'une zone nitrifiante (35,38) représentée par une zone de dégradation à charge réduite destinée à la nitrification ou par une zone de traitement secondaire à charge réduite et destinée à la nitrification, dans au moins une zone (1,27,7,8,9,33,34) non nitrifiante, caractérisé par le fait que le mélange eau-boue (23,41) est riche en oxygène, par le fait qu'il y a une activation biologique appropriée par refoulement du mélange eau-boue riche en nitrificateurs et en oxygène (23,41) dans au moins une des zones d'activation traversée précédemment par l'eau usée (1, 27, 7, 8,9) :
   – Conduite ou tronçon d'entrée (n) (27),
   – Station de pompage de l'afflux avec puisard (ELPW) (7),
   – Dessableur et séparateur de graisse (SF) (8),
   – Bassin avec déversoir d'orage (RÜB)(10),
   – Décanteur primaire (VKR)(9),
   – Tous les tronçons d'entrée, collecteurs d'entrée et zones tampons, bassins d'entrée jusqu'à la phase biologique principale (3),
   et que l'activation adéquate s'effectue de la manière suivante :
   a) au minimum, l'activation des zones d'activation (7,8,9,10,27) s'effectue pour une nitrification et une hydrolyse rapides et/ou une fixation plus importante des phosphates en amenant un mélange eau usée-boue (23,41) riche en nitrificateurs et oxygène, et/ou en plus, des boues en excès (91) pauvres en phosphates et riches en nitrificateurs ; ou bien
   b) en plus de a) les zones d'activation (7, 9, 10,27) sont utilisées pour la remobilisation des phosphates avec un apport de boue de retour riche en phosphates et pauvre en nitrates et sans apport d'oxygène ; ou
   c) à la suite de a) et en complément, on effectue une activation du décanteur primaire pour une dénitrification plus importante par rapport complémentaire d'eau de recyclage non décantée et riche en nitrates.

2. Procédé selon la revendication 1, caractérisé par le fait, qu'une partie de l'eau usée est traitée dans une phase à charge très élevée (34) (HBAC 2), et l'autre partie dans une phase couplée en parallèle et à charge réduite, favorable à la nitrification (NBAN) (35), à partir de laquelle le mélange eau-boue riche en nitrificateurs et en oxygène (23,41) est amené dans la phase à charge très élevée (34) (HBAC 2).

3. Procédé selon la revendication 2, caractérisé par le fait, qu'une partie de l'eau usée est traitée dans une phase à charge très élevée (34) (HBAC 2) et l'autre partie dans une phase à charge réduite couplée en parallèle (35) (NBAN) et qu'ensuite les deux flux d'eau usée sont réunis (65).

4. Procédé selon la revendication 1, caractérisé par le fait qu'une élimination supplémentaire plus importante de phosphore est obtenue en intercalant, sur le circuit des boues de retour (12, 79), des tronçons de remobilisation de phosphates(20,76).

5. Procédé selon la revendication 4, caractérisé par le fait que, pour les zones de remobilisation, peuvent être choisis :

    a) les conduites de refoulement en exploitation (27), les bassins collecteurs, les puisards, les cônes à boue remplis, mais non les zones de décantation en fonctionnement séquentiel dans les phases de dégradation biologiques (4, 5) ;

    b) les tronçons de conduite ou de canalisation ou de circuit non utilisés ;

    c) les zones de décantation primaires ne communiquant pas avec l'eau affluente ou les zones de bassins d'activation (76) qui ne seront pas alimentées par un flux d'eau usée ou de boues primaires ;

    d) les zones au fond des bassins avec déversoirs d'orage ou des décanteurs primaires ou des canalisations d'entrée (10) ;

    e) les épaississeurs de boue non utilisés ;

    f) les épaississeurs préliminaires en évacuant davantage de liquide surnageant ; ou

    g) des contenants nouvellement aménagés (20), dans la mesure où toute la boue de retour doit passer par ces tampons et où ces zones ne seront pas alimentées par un flux d'eau usée (27) ou en boues primaires (14).

6. Procédé selon la revendication 4, caractérisé par le fait que, la zone de remobilisation (20, 76) est couplée en aval à une partie où s'effectue la précipitation.

7. Procédé selon la revendication 4, caractérisé par le fait d'un apport supplémentaire de substrat (15) sous forme de liquide surnageant, d'eau de digestion, de filtrat ou de centrat dans la zone de remobilisation (20, 76) après séparation des boues en excès (13) qui sont amenées au digesteur.

8. Procédé selon la revendication 1, caractérisé par le fait que, le recyclage se fait à partir de la zone supérieure de sédimentation ou d'écoulement (16, 24, 25).

9. Procédé d'épuration des eaux usées selon la revendication 1, caractérisé par le fait que, le recyclage se fait avant la zone d'entrée (27) de la station de traitement.

10. Procédé selon les revendications 2 et 3, caractérisé par le fait que, la boue en excès et la boue de retour sont soutirées de la zone nitrifiante (35, 38, 37) et amenées (33) dans la zone en fonctionnement non nitrifiante (34, 36).

11. Procédé selon les revendications 2 ou 3, caractérisé par le fait que, l'eau usée traverse une phase à charge élevée (33) (HBAC 1), qu'une partie de l'eau usée est amenée, en passant par un tronçon normal (94), sans traitement particulier, dans une phase biologique principale (3) de la station de traitement, que les deux flux d'eau usée sont traités séparément dans deux zones à charge réduite (35) (NBAN) et (HBAC 2) (34) et que, après la jonction des eaux usées à charge très élevée et à charge réduite (65), ces deux flux sont traités ensemble dans une zone couplée en aval (NABN +C) (38).

12. Procédé selon la revendication 11, caractérisé par le fait que, dans la zone à charge très élevée (34) (HBAC 2), l'eau usée est traitée dans des conditions favorables au développement des bactéries chimioorganotrophes à croissance rapide.

13. Procédé selon la revendication 12, caractérisé par le fait que, la zone à charge très élevée (HBAC 2) (34) et la phase à charge élevée (HBAC 1) (33) sont exploitées en vue d'une production plus importante d'énergie avec une production plus importante de boue ou bien en vue d'une fixation plus importante de phosphates avec une durée d'aération prolongée en conséquence et une boue plus âgée.

14. Procédé selon la revendication 1, caractérisé par le fait que, la dénitrification (50) se fait à la fin de la nitrification, au début de la zone séparée de traitement secondaire (NBAN + C) (38).

15. Procédé selon les revendications 2, 3, 9, 11 ou 13, caractérisé par le fait qu'une séparation des boues est faite entre les zones à charge très élevée (33, 34) et les zones à charge réduite (35, 38), par le fait qu'une zone de décantation (44,55) est couplée en aval à la zone à charge très élevée, et que la conduite de boue de la phase à charge élevée (HBAC 1) (33) et de la zone à charge très élevée (HBAC 2) (34) est séparée de celle des zones à charge réduite (35) (NBAN ; NBAN + C) (38).

16. Procédé selon la revendication 1, caractérisé par le fait que, des boues flottantes riches en nitrificateurs (16), provenant d'une zone de décantation intermédiaires (4) ou secondaire (6) de la station de traitement sont mélangées à l'eau usée.

17. Procédé selon la revendication 1, caractérisé par le fait qu'aux zones d'activation (1), on ajoute un supplément de boue en excès (69) riche en nitrificateurs aansi que de l'eau de recyclage (95) non décantée, riche en nitrificateurs et pauvre en nitrates.

18. Procédé selon la revendication 1, caractérisé par le fait qu'avant d'ajouter les boues de la station de traitement riches en nitrificateurs (41) au mélange eau usée-boue (23) ou avant de les amener dans les zones d'activation (1), elles sont traitées pour une remobilisation des phosphates (20).

19. Procédé selon la revendication 1, caractérisé par le fait que, les masses conduites dans les zones d'activation sont dénitrifiées avant d'être amenées dans les phases biologiques principales (2,3,4,5).

20. Procédé selon la revendication 1, caractérisé par le fait que, la quantité de boue riche en nitrificateurs (41) ajoutée aux zones d'activation (1) est limitée par le besoin en nitrificateurs de la phase biologique principale (35, 37).

21. Procédé selon la revendication 1, caractérisé par le fait que, par temps de pluie la quantité de boue riche en nitrificateurs (41) ajoutée aux zones d'activation (1) est augmentée de manière à ce que la quantité d'oxygène apportée par l'activation soit largement consommée dans les zones d'activation (1).

22. Procédé selon la revendication 1, caractérisé par le fait que, le soutirage d'eau de recyclage (23, 24, 25, 26) dans les zones de sédimentation ou d'eau clarifiée des décanteurs (42,48,) se fait de façon variable si bien qu'un soutirage plus important de la zone de sédimentation (42, 48) entraîne une augmentation de la quantité de boue dans l'eau de recyclage (23, 24, 25, 26).

23. Procédé selon la revendication 1, caractérisé par le fait qu'en plus du recyclage du mélange eau usée-boue (41,43), on soustrait du circuit de la station de traitement de l'eau riche en nitrates (89) qu'on amène directement dans une zone d'activation couplée en aval à d'autres zones d'activation où se font l'hydrolyse (86) et la nitrification (87, 88, 89).

24. Procédé selon la revendication 1, caractérisé par le fait qu'une aération complémentaire (92) des zones d'activation (1) et des tronçons d'écoulement de l'eau de recyclage se fait au moyen de dispositifs d'aération à commande individuelle.

25. Procédé selon la revendication 1, caractérisé par le fait qu'une aération secondaire complémentaire du mélange eau usée-boue (23, 24) est effectuée dans la zone de traitement final (63) ou zone d'évacuation après le processus de décantation de l'eau usée dans une zone de décantation secondaire (42, 48) de la station d'épuration.

26. Procédé selon une ou plusieurs revendications de 2 à 12, caractérisé par le fait que, la zone à charge très élevée (HBAC 2) (34, 32) et la zone à charge réduite (NBAN) (35) sont exploitées dans leurs champs optimaux et que d'autres zones parallèles (39, 51) sont exploitées en fonction de leur charge de manière à ce qu'en cas de charge totale affluente réduite, l'exploitation s'effectue avec une minimalisation de l'énergie mais reste nitrifiante ou sporadiquement nitrifiante et dénitrifiante, sans mélanger.

27. Procédé selon la revendication 26, caractérisé par le fait qu'une charge affluente réduite demande un apport d'oxygène plus faible.

28. Procédé selon la revendication 27, caractérisé par le fait qu'une alimentation réduite en oxygène est effectuée de telle sorte qu'une activation rapide est possible dans ce sens que, lorsque la charge augmente, le biocènose reste dans le champ de charge admissible et que l'apport complémentaire nécessaire en oxygène, en cas d'augmentation de la charge ne soit pas supérieur à l'apport constant d'oxygène que nécessiterait une exploitation permanente de cette zone.

29. Procédé selon la revendication 26, caractérisé par le fait qu'en cas de réduction de la charge affluente, la charge est d'abord concentrée sur les zones principales (HNAC 2) (34), NBAN (35) et les autres zones parallèles (37) (zones de secours) ne sont exploitées qu'en charge minimale et montées progressivement en puissance si la charge augmente.

30. Procédé selon les revendications 28 et 29, caractérisé par le fait qu'une activation rapide des zones de secours est réalisé par l'apport d'une biomasse extérieure en provenance des zones principales (34, 35).

31. Procédé selon les revendications 5 ou 6 et 8, caractérisé par le fait que, les conditions de charge dans la zone à charge très élevée (34) (HBAC 2) et dans la zone à charge réduite (35) (NBAN) sont périodiquement alternées.

32. Procédé selon les revendications 5 ou 6 et 8, caractérisé par le fait que, les zones de dégradation sont formées de bassin en cascades (3, 5).

33. Procédé selon les revendications 5 ou 6 et 8, caractérisé par le fait que, la zone à charge élevée (33) (HBAC 1) est couplée en amont à une zone de dénitrification importante (43) et que la zone à charge très élevée (34, 36) (HBAC 2) et la zone à charge réduite (35) (NBAN) sont couplées en amont et en aval à une zone de dénitrification (43, 50).

34. Procédé selon les revendications 5, 6 et 8, caractérisé par le fait que, la zone à charge élevée (33) (HBAC 1) et la zone à charge très élevée (34) (HBAC 2) et/ou la zone à charge réduite (35) (NBAN) sont respectivement couplées en aval à une zone de décantation (34).

35. Procédé selon les revendications 5 ou 6, 4 et 8, caractérisé par le fait que, l'aération de chaque zone individuelle ou cascade (64) se fait avec des aérateurs séparés à commandes individuelles.

36. Procédé selon les revendications 5 ou 6 et 8, caractérisé par le fait que, la fonction de dégradation des zones à charge très élevée et à charge réduite s'effectue sans fonction de dénitrification, au moyen d'une installation à boues activées ou d'autres éléments de dégradation tels que lits bactériens, lits bactériens immergés, éventuellement aussi au moyen d'une combinaison des deux.

37. Procédé selon les revendications 5 ou 6 et 8, caractérisé par le fait que, dans les zones de dégradation biologiques, les circuits des boues sont séparés : la boue en excès (40, 47, 75) produite dans les zones à charge élevée et très élevée est amenée directement dans le digesteur et la boue produite dans les zones à charge réduite (19, 41) n'est pas conduite directement dans le digesteur, mais séjourne amplement dans le système.

38. Procédé selon les revendications 4 et 37, caractérisé par le fait que, la boue de retour de la zone à charge très élevée (33, 34, 36) et la boue totale de la zone à charge réduite (35, 37, 38) sont amenées dans des circuits séparés dans des zones anaérobies de remobilisation séparées (76).

BILD 1

BILD 2

BILD 3

EP 0 354 906 B1

BILD 4

EP 0 354 906 B1

BILD 5

A

B

C

22

BILD 6

BILD 7

BILD 8